# EUROPÄISCHE PATENTSCHRIFT

(11) **EP 1 687 760 B1**
(45) Veröffentlichungstag und Bekanntmachung des Hinweises auf die Patenterteilung: **18.02.2009**
(21) Anmeldenummer: 04789920.8
(22) Anmeldetag: 04.10.2004
(51) Int. Cl.: G06K 19/077, G06K 19/02, H01Q 1/27

(54) **VERFAHREN ZUM HERSTELLEN VON EINEM TRANSPONDER**
METHOD FOR PRODUCING A TRANSPONDER
PROCEDE POUR FABRIQUER UN TRANSPONDEUR

(30) Priorität: 27.11.2003 DE 10355979
(43) Veröffentlichungstag der Anmeldung: 09.08.2006
(73) Patentinhaber: Smartrac IP B.V., 1077 XX Amsterdam (NL)
(72) Erfinder: WENDISCH, Karl-Heinz, 33154 Salzkotten (DE)
(74) Vertreter: Tappe, Hartmut
(86) Internationale Anmeldenummer: PCT/DE2004/002207
(87) Internationale Veröffentlichungsnummer: WO 2005/052854

(56) Entgegenhaltungen:
- WO-A-03/042911
- FR-A- 2 833 109
- US-A- 5 495 250
- US-A- 5 756 986

## Beschreibung

Die Erfindung betrifft ein Verfahren zum Herstellen von einem Transponder im Mehrschichtaufbau gemäß dem Oberbegriff des Anspruchs 1.

Aus der DE 44 10 732 C2 ist ein Verfahren zum Herstellen von einem Transponder bekannt, bei dem auf eine Substratschicht eine Antennenspule und ein mit dieser kontaktierter Chip aufgebracht wird. Die Antennenspule wird durch Verlegen eines Drahtes auf die Substratschicht aufgebracht, wobei der Draht direkt mit der Substratschicht verbunden wird. Als Materialien für diese Substratschicht dienen üblicherweise PVC sowie Polyester, wie es aus der DE 101 05 163 A1 bzw. der DE 102 05 91.4 A1 bekannt ist. Zusätzlich kann der Transponder weitere Schichten, wie beispielsweise eine auf die Substratschicht aufgebrachte Deckschicht aufweisen, so dass die Antennenspule bzw. der Chip zwischen diesen beiden Schichten eingebettet in einer geschützten Lage ist.

Die WO 03-04 29 11 A2 offenbart einen Transponder, der auf einer aus einem Textilgewebe bestehenden Substratschicht aufgebracht ist. Eine Antennenspule und ein Chip sind vermittels eines auf das Textilgewebe aufgebrachten Schmelzklebers auf dem Textilgewebe fixiert. Die Fixierung erfolgt durch ein kurzes Aufheizen des Schmelzklebers und Andrücken der lose gewickelten Antennenspule mit dem Chip.

Auch ist aus der US 5,756,986 ein Transponder bekannt, bei dem ein Chip und eine Antennenspule vermittels einer selbstklebenden Schicht auf einem Textilband fixiert sind. Weiter ist der Chip und die Antennenspule von einer thermoplastischen Zusatzbeschichtung abgedeckt, welche den Chip und die Antennenspule zwischen der selbstklebenden Schicht und der thermoplastischen Zusatzbeschichtung fixiert.

Solche üblicherweise kontaktlos betreibbaren Transponder auf Basis von Kunststoff-Mehrschichtaufbauten werden insbesondere in Scheckkartenformat gefertigt und werden als Identifikationskarte beispielsweise im öffentlichen Nahverkehr eingesetzt. Es besteht jedoch auch ein Bedürfnis, Transponder in Ausweisdokumenten, wie zum Beispiel Pässen, einzusetzen, die gewebeähnliche Materialschichten aufweisen. Hier stellt sich das Problem, dass die Antennenspule nur unzureichend auf einer solchen gewebeähnlichen Schicht fixiert werden kann.

Aufgabe der vorliegenden Erfindung ist es daher, ein Verfahren zum Herstellen von einem Transponder derart weiterzubilden, dass eine unlösbare Verbindung zwischen dem Transponder und einer Deckschicht bei gleich bleibender Dicke des Endprodukts ermöglicht wird.

Zur Lösung dieser Aufgabe ist das erfindungsgemäße Verfahren in Verbindung mit dem Oberbegriff des Patentanspruchs 1 dadurch gekennzeichnet, dass als Haft- und/oder Aufnahmemittel ein Kleber verwendet wird, der als vernetzter Kleber ausgebildet ist, und dass die Antennenspule von dem Kleber vollständig aufgenommen wird.

Das erfindungsgemäße Verfahren ermöglicht vorteilhaft das Fixieren einer Antennenspule auf einer gewebeartigen Substratschicht und die einfache Weiterverarbeitbarkeit dieser Substratschicht zur Herstellung von Identifikationskabeln, Pässen und dergleichen. Durch das Aufbringen des vernetzenden Klebers zwischen der Substratschicht und dem das spätere Antennenspule bildende Antennenmaterial kann eine dauerhafte und innige Verbindung des Antennenmaterials mit der Substratschicht erfolgen. Die Haftwirkung zwischen der Substratschicht und einer weiteren Schicht wird so weiter gefördert. Der Kleber ermöglicht zum einen die Aufnahme des Antennenmaterials zur Bildung der Antennenspule. Des Weiteren bewirkt der Kleber die Ausbildung einer planaren Oberfläche der Substratschicht, so dass die Wirksamkeit weiterer Verarbeitungsschritte, wie beispielsweise das Auflaminieren einer Deckschicht auf die Substratschicht, verbessert wird. Ist das Antennenmaterial der zu bildenden Antennenspule soweit eingebettet, dass das Antennenmaterial auf einer der Substratschicht abgewandten Seite von dem Kleber abgedeckt ist, ergibt sich eine durchgängig planare Oberfläche, so dass die Substratschicht die gleichen Weiterverarbeitungseigenschaften aufweist wie die herkömmlichen Polyester- oder PVC-Substratschichten.

Nach einer bevorzugten Ausführungsform der Erfindung wird die Substratschicht mit einem laminierbaren thermoplastischen Kleber beschichtet, so dass in einem nachfolgenden Schritt die Antennenspule beispielsweise durch Verlegen eines Spulendrahtes auf den thermoplastischen Kleber aufgebracht werden kann. Das Aufbringen der Antennenspule kann beispielsweise durch eine Ultraschallbehandlung des verlegten Spulendrahtes unterstützt werden, der damit in den thermoplastischen Kleber eingedrückt wird. Vorteilhaft ergibt sich dadurch eine feste Halterung der Antennenspule an der Substratschicht, so dass das so gebildete Halbzeug als Zwischenerzeugnis weiteren, insbesondere ortsfernen Verarbeitungsprozessen zugeführt werden kann.

Nach einer Weiterbildung der Erfindung kann die Substratschicht mit einem Klebstoff teilflächig oder flächig beschichtet werden zur Aufnahme des die Antennenspule bildenden Spulendrahts. Vorteilhaft dient der Klebstoff zum einen zur Einbettung und festen Lagerung der Spule an der Substratschicht und zum anderen bei Aktivierung des Klebstoffes zur Verbindung der Substratschicht mit einer weiteren Schicht. Der Herstellungsaufwand für einen flexiblen Datenträger, wie beispielsweise für einen Pass, kann hierdurch verringert werden.

Nach einer Weiterbildung der Erfindung wird der thermoplastische Kleber auf die Substratschicht auflaminiert oder auflackiert oder aufkaschiert. Das Aufbringen des thermoplastischen Klebers kann lokal begrenzt sein, beispielsweise auf die Bereiche, in denen der Spulendraht für die Antennenspule später verlegt wird. Bei der zusätzlichen Funktion des thermoplastischen Klebers kann dieser auch vollflächig aufgebracht werden.

Nach einer Weiterbildung der Erfindung wird der thermoplastische Kleber als Schmelze auf die Substratschicht aufgebracht. Der Kleber kann beispielsweise aus einem PVC-Material bestehen.

Nach einer Weiterbildung der Erfindung kann die Antennenspule auch durch Aufbringen einer Metallbeschichtung und durch einen nachfolgenden Ätzvorgang unter Ausbildung von Leiterbahnen hergestellt werden, wobei vor Aufbringen der Metallbeschichtung ein mindestens die gleiche Fläche umfassender Kleber auf die Substratschicht aufgebracht worden ist. Auch hier dient der Kleber in erster Linie zur Aufnahme der für die Antennenspule maßgeblichen Leiterbahnen, so dass eine für die Weiterverarbeitung der Substratschicht ebene Oberfläche gewährleistet ist.

Weitere Vorteile der Erfindung ergeben sich aus den weiteren Unteransprüchen.

Ein Ausführungsbeispiel der Erfindung wird nachfolgend anhand einer Figur näher erläutert.

Es zeigt:
- Figur: schematischer Querschnitt durch einen Transponder.

Ein Transponder besteht im Wesentlichen aus einer Substratschicht 1, auf der eine Antennenspule 2 sowie ein mit derselben kontaktierter nicht dargestellter Chip angeordnet sind. Der Transponder weist mehrere Schichten auf, wobei er - wie im Folgenden beschrieben - zusätzlich lediglich eine Deckschicht 4 aufweisen kann. Der so gebildete Transponder kann als Fertigprodukt oder Zwischenprodukt weiteren, hier nicht beschriebenen Verarbeitungsschritten zugeführt werden, so dass er als Identifikationsdatenträger, im Pass bzw. als Wertdokument eingesetzt werden kann. Der Transponder kann beispielsweise in den Passrücken, in der VISA-Seite (Label, welches auf der Visa-Seite aufgebracht wird) oder in der Passinhaberseite (Seite, auf der Fotos, Name etc. zur Personalisierung aufgebracht sind) integriert werden bzw. dieselben bilden.

Nach dem erfindungsgemäßen Verfahren zur Herstellung des Transponders ist die Substratschicht 1 aus einem gewebeartigen Material gebildet. Die Substratschicht 1 besteht daher aus einem textilartigen Flächengebilde mit mehreren sich kreuzenden Fadensystemen 5. Die Substratschicht 1 kann aus einem Polyamid, Polyester, Baumwolle oder aus einem Gewebemischmaterial bestehen.

Die Substratschicht 1 kann eine Dicke von etwa 100 µm haben. Auf einer Flachseite der Substratschicht 2 wird die Antennenspule 2 mit einem Spulendraht 6 durch Verlegen aufgebracht. Damit eine sichere Haftung des Spulendrahtes 6 auf der Substratschicht 1 gegeben ist, ist nach erfindungsgemäßen Verfahren vorgesehen, dass vorher auf die Flachseite der Substratschicht 1 ein das Antennenmaterial aufnehmendes Haftmittel als thermoplastische Zusatzbeschichtung 7 aufgebracht wird. Die thermoplastische Zusatzbeschichtung kann aus einem Polycarbonat, PVC-Material oder einem beliebigen anderen Polymermaterial bestehen. Im vorliegenden Ausführungsbeispiel ist die Zusatzbeschichtung 7 vollflächig auf die Substratschicht 1 aufgebracht. Alternativ kann die thermoplastische Zusatzbeschichtung 7 auch lediglich oder teilweise in den Bereichen aufgebracht werden, in denen der Spulenträger 6 aufgebracht wird.

In einem nachfolgenden Verfahrensschritt erfolgt das Einbringen bzw. Einbetten des Spulendrahtes 6 in die thermoplastische Zusatzbeschichtung 7. Hierbei kann der Spulendraht 6 durch Erwärmung und Eindrücken desselben in die Zusatzbeschichtung 7 aufgebracht werden, so dass im Wesentlichen der gesamte Draht 6 durch die Zusatzbeschichtung 7 umgeben ist. Es ergibt sich hierdurch eine ebene Oberfläche 8 eines so gebildeten Zwischenprodukts 9, das in herkömmlicher Weise weiterverarbeitet werden kann durch Aufbringen mindestens der weiteren Deckschicht 4. Durch das Vorsehen der Zusatzbeschichtung 7 kann in einem nachfolgenden Verbindungsschritt die Deckschicht 4 durch Lamination mit dem Zwischenprodukt 9 verbunden werden, wobei eine innige und sichere Verbindung geschaffen wird.

Die Deckschicht 4 kann ebenfalls aus einem Gewebematerial bestehen, so dass das Endprodukt sehr flexibel, reißfest ist und verbesserte Biegeeigenschaften aufweist.

Alternativ kann die Deckschicht 4 auch aus einem thermoplastischen Material, wie beispielsweise PVC, PC und dergleichen bestehen.

Alternativ kann der Transponder auch mehr als zwei Schichten aufweisen. Dies ist abhängig von dem Einsatzfeld desselben. Die Deckschicht muss beispielsweise geeignet sein, Sicherheitselemente, wie beispielsweise Hologramme oder Beschriftungen durch Belasern oder beispielsweise Transferdruckverfahren, aufnehmen zu können.

Das Aufbringen des Spulendrahtes 6 bzw. des nicht dargestellten Chips kann nach einem der in der DE 44 10 732 C2 beschriebenen Verlegeverfahren erfolgen. Insbesondere kann der Spuhlendraht 6 vermittels einer Ultraschalleinwirkung auf bzw. in die Zusatzbeschichtung 7 verlegt werden. Dabei kann der Spulendraht 6 teilweise oder vollständig in die Zusatzbeschichtung 7 eingebracht werden. Durch das Einbringen von Wärme während des Verlegens des Spulendrahtes 6 oder bei dem späteren Laminationsprozess zwischen der Substratschicht 1 und der Deckschicht 4 stellt sich in einem Verbindungsbereich 10 zwischen der Substratschicht und der Zusatzbeschichtung 7 eine Schwindung ein, die eine Verringerung der Dicke der Substratschicht 1 und der Zusatzbeschichtung 7 in einem zweistelligen µm-Bereich bewirkt. Die Dicke der Zusatzbeschichtung 7 ist derart gewählt, dass bei einer solchen Schwindung der Spulendraht 6 im Wesentlichen in der Zusatzbeschichtung 7 angeordnet ist. Die Zusatzbeschichtung 7 kann eine ursprüngliche Dicke von 20 bis 100 µm betragen.

Nach einer alternativen Ausführungsform kann die thermoplastische Zusatzbeschichtung 7 auch auf die Substratschicht 1 auflaminiert oder auflackiert oder aufkaschiert werden. Alternativ kann die thermoplastische Zusatzbeschichtung 7 auch als PVC-Schmelze auf die Substratschicht 1 aufgebracht werden. Wesentlich ist, dass sie eine solche Dicke aufweist, dass sie geeignet ist, den Spulendraht 6 teilweise oder vollständig aufzunehmen.

Nach einer alternativen Ausführungsform des Haftmittels 7 kann dasselbe auch als Kleber oder Klebstoffbeschichtung ausgebildet sein, der beispielsweise thermisch oder mittels Ultraviolett-Einstrahlung aktiviert wird. Der Klebstoff kann auch als vernetzter oder teilvernetzter Kleber ausgebildet sein. Auf diese Weise ist das Haftmittel 7 nicht nur dazu geeignet, den Spulendraht 6 aufzunehmen, sondern in einem nachfolgenden Schritt eine unlösbare.Verbindung zwischen der Substratschicht 1 einerseits und einer weiteren Schicht 4 andererseits zu ermöglichen. Die Schicht 4 kann alternativ zusammen mit gegebenenfalls weiteren Schichten durch Wärme und Druck innig mit der Substratschicht 1 verbunden werden.

Der Kleber kann auf Epoxidharzbasis oder als Zweikomponentensystem ausgebildet sein. Der Klebstoff 7 kann auf beliebige Weise aufgebracht werden, beispielsweise durch Aufspritzen oder in Form einer Kleberfolie oder eines thermoplastischen Films. Der Kleber kann aus einem Polymermaterial, insbesondere aus einem Polyester-Polyrethan-Material bestehen. Alternativ kann der Kleber auch durch Pressdruck (Pressure Sensitive), durch Anlegen einer elektrischen Spannung oder eines Magnetfeldes aktiviert werden. Ein nachvernetzender Polyrethan-Kleber kann bei einer relativ niedrigen Temperatur auf die nicht erwärmte Substratschicht aufgebracht werden. Bei noch weicher Kleberschicht kann dann der Spulendraht 6 in die Klebeschicht eingebracht werden. Die endgültige Vernetzung des Klebers erfolgt selbstständig, beispielsweise durch Einwirkung von Luftfeuchtigkeit.

Nach einer nicht dargestellten Ausführungsform kann die Antennenspule 2 bzw. der Spulendraht 6 durch einen Ätzvorgang auf die Substratschicht 1 bzw. die Zusatzbeschichtung 7 aufgebracht werden. Zu diesem Zweck wird das Haftmittel 7 zumindest in einer Flächengröße, in der später die Antennenspule 2 ausgebildet ist, auf die Substratschicht 1 aufgebracht. Nachfolgend erfolgt das Aufbringen einer flächigen Metallschicht auf die Haftmittelschicht 7, so dass nachfolgend in üblicher Weise nach Anlegen einer Maskierung das Metall mit Ausnahme der die Antennenspule 2 bildenden Leiterbahnen freigelegt wird.

Alternativ kann das Antennenmaterial auch als Paste, insbesondere als leitende Silberpaste aufgebracht werden.

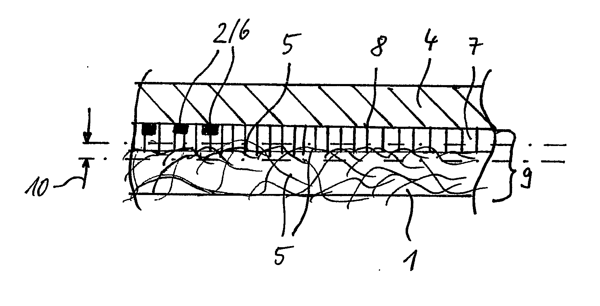

## Patentansprüche

1. Verfahren zum Herstellen von einem Transponder im Mehrschichtaufbau enthaltend eine Substratschicht (1) auf der eine Antennenspule (2) und ein Chip aufgebracht wird, wobei die Substratschicht aus einem gewebeartigen Material hergestellt wird und vor dem Aufbringen der Antennenspule auf die Substratschicht zwischen der Substratschicht und einem die Antennenspule bildenden Antennenmaterial ein Haft- und/oder Aufnahmemittel vorgesehen ist, derart, dass die Antennenspule während oder nach dem Aufbringen des Antennenmaterials haftend mit dem Haft- und/oder Aufnahmemittel verbunden wird,
**dadurch gekennzeichnet,**
**dass** als Haft- und/oder Aufnahmemittel ein Kleber (7) verwendet wird, der als vernetzter Kleber ausgebildet ist, und dass die Antennenspule von dem Kleber vollständig aufgenommen wird.

2. Verfahren nach Anspruch 1,
**dadurch gekennzeichnet,**
**dass** die Substratschicht (1) mit dem Kleber (7) teilflächig oder vollflächig beschichtet wird zur Aufnahme der Antennenspule (2) auf der Substratschicht.

3. Verfahren nach Anspruch 1 oder 2,
**dadurch gekennzeichnet,**
**dass** die Substratschicht (1) mit einem laminierbaren thermoplastischen Kleber (7) als Haftmittel beschichtet wird zur Aufnahme der Antennenspule (2) auf die Substratschicht.

4. Verfahren nach einem der Ansprüche 1 bis 3,
**dadurch gekennzeichnet,**
**dass** die Substratschicht (1) mit einem aktivierbaren Kleber (7) beschichtet wird zur Aufnahme der Antennenspule (2) auf die Substratschicht und zum nachfolgenden Laminieren der Substratschicht mit einer auf der Seite der Antennenspule angeordneten benachbarten Schicht (4).

5. Verfahren nach einem der Ansprüche 1 bis 4,
**dadurch gekennzeichnet,**
**dass** der Kleber (7) thermisch oder mittels Ultraviolett-Einstrahlung aktiviert wird.

6. Verfahren nach einem der Ansprüche 1 bis 5,
**dadurch gekennzeichnet,**
**dass** der Kleber (7) auf die Substratschicht (1) auflaminiert oder auflackiert oder aufkaschiert wird.

7. Verfahren nach einem der Ansprüche 1 bis 6,
**dadurch gekennzeichnet,**
**dass** der Kleber (7) in Form einer Schmelze, insbesondere aus PVC auf die Substratschicht (1) aufgebracht wird.

8. Verfahren nach einem der Ansprüche 1 bis 7,
**dadurch gekennzeichnet,**
**dass** ein Spulendraht (6) der zu bildenden Antennenspule (2) auf dem Kleber (7) der Substratschicht (1) verlegt wird.

9. Verfahren nach Anspruch 8,
**dadurch gekennzeichnet,**
**dass** der Spulendraht (6) der zu bildenden Antennenspule (2) unter Erwärmung des Klebers (7) in denselben eingedrückt wird.

10. Verfahren nach einem der Ansprüche 1 bis 9,
**dadurch gekennzeichnet,**
**dass** die mit der Antennenspule (2) versehene Substratschicht (1) mit mindestens einer weiteren Zwischenschicht und/oder der Deckschicht (4) durch Wärme und Druck verbunden wird.

11. Verfahren nach einem der Anspruch 1 bis 7,
**dadurch gekennzeichnet,**
**dass** zuerst der Kleber mindestens in einer Flächengröße einer später auf denselben aufzubringenden Metallschicht auf die Substratschicht (1) aufgebracht wird und dann die Antennenspule (2) durch einen Ätzvorgang der Metallschicht erzeugt wird.

12. verfahren nach einem der Ansprüche 1 bis 11,
**dadurch gekennzeichnet,**
**dass** nach dem Erstellen der Antennenspule (2) der Chip auf den Kleber und/oder die Substratschicht (1) unter Kontaktierung mit dem Spulendraht (6) der Antennenspule aufgebracht wird.

## Claims

1. Method for producing a transponder with a multi-layer structure, containing a substrate layer (1) to which an antenna coil (2) and a chip are applied, with the substrate layer being produced from a web-like material and an adhesive and/or accommodating agent being provided between the substrate layer and an antenna material which forms the antenna coil before the antenna coil is applied to the substrate layer in such a manner that the antenna coil is adhesively joined to the adhesive and/or accommodating agent during or after the antenna material is applied,
**characterised in that**
as the adhesive and/or accommodating agent an adhesive (7) is used, which is configured as a cross-linked adhesive and that the antenna coil is completely accommodated by the adhesive.

2. Method according to Claim 1,
**characterised in that**
the substrate layer (1) is coated with the adhesive (7) over part or all of its area in order to accommodate the antenna coil (2) on the substrate layer.

3. Method according to Claim 1 or 2,
**characterised in that**
the substrate layer (1) is coated with a thermoplastic adhesive (7), which can be laminated, as the adhesive agent in order to accommodate the antenna coil (2) on the substrate layer.

4. Method according to one of Claims 1 to 3,
**characterised in that**
the substrate layer (1) is coated with an adhesive (7), which can be activated, in order to accommodate the antenna coil (2) on the substrate layer and in order subsequently to laminate the substrate layer with an adjacent layer (4) which is arranged on the side of the antenna coil.

5. Method according to one of Claims 1 to 4,
**characterised in that**
the adhesive (7) is activated thermally or by means of ultraviolet irradiation.

6. Method according to one of Claims 1 to 5,
**characterised in that**
the adhesive (7) is laminated or painted or clad onto the substrate layer (1).

7. Method according to one of Claims 1 to 6,
**characterised in that**
the adhesive (7) is applied to the substrate layer (1) in the form of a melt, in particular consisting of PVC.

8. Method according to one of Claims 1 to 7,
**characterised in that**
a coil wire (6) of the antenna coil (2) to be formed is laid on the adhesive (7) of the substrate layer (1).

9. Method according to Claim 8,
**characterised in that**
the coil wire (6) of the antenna coil (2) to be formed is pressed into the adhesive (7) while the latter is heated.

10. Method according to one of Claims 1 to 9,
**characterised in that**
the substrate layer (1) which is provided with the antenna coil (2) is joined to at least one further intermediate layer and/or the covering layer (4) by means of heat and pressure.

11. Method according to one of Claims 1 to 7,
**characterised in that**
first the adhesive is applied to the substrate layer (1) at least in an area of a metal layer which is to be applied subsequently to the adhesive, and then the antenna coil (2) is produced by an etching process of the metal layer.

12. Method according to one of Claims 1 to 11,
**characterised in that**
after the antenna coil (2) has been created, the chip is applied to the adhesive and/or the substrate layer (1) while making contact with the coil wire (6) of the antenna coil.

## Revendications

1. Procédé de fabrication d'un transpondeur à structure multicouches, contenant une couche de substrat (1) sur laquelle une bobine d'antenne (2) et une puce sont montées, dans lequel la couche de substrat est fabriquée dans un matériau de type toile et, avant le montage de la bobine d'antenne sur la couche de substrat, un agent adhésif et/ou un moyen de réception est prévu entre la couche de substrat et un matériau d'antenne formant la bobine d'antenne, de telle sorte que la bobine d'antenne soit reliée à l'agent adhésif et/ou au moyen de réception par adhérence pendant ou après le montage du matériau d'antenne,
**caractérisé en ce que**
comme agent adhésif et/ou moyen de réception, on emploie une colle (7) qui est réalisée comme une colle réticulée et **en ce que** la bobine d'antenne est complètement renfermée dans la colle.

2. Procédé selon la revendication 1,
**caractérisé en ce que**
la couche de substrat (2) est revêtue de la colle (7) sur une partie ou sur la totalité de sa surface, afin de recevoir la bobine d'antenne (2) sur la couche de substrat.

3. Procédé selon la revendication 1 ou 2,
**caractérisé en ce que**
la couche de substrat (1) est revêtue d'une colle (7) thermoplastique stratifiable faisant office d'agent adhésif, afin de recevoir la bobine d'antenne (2) sur la couche de substrat.

4. Procédé selon une des revendications 1 à 3,
**caractérisé en ce que**
la couche de substrat (1) est revêtue d'une colle (7) activable, afin de recevoir la bobine d'antenne (2) sur la couche de substrat et afin de stratifier à la suite de cela la couche de substrat avec une couche (4) adjacente disposée sur le côté de la bobine d'antenne.

5. Procédé selon une des revendications 1 à 4,
**caractérisé en ce que**
la colle (7) est activée thermiquement ou au moyen d'un rayonnement ultraviolet.

6. Procédé selon une des revendications 1 à 5,
**caractérisé en ce que**
la colle (7) est stratifiée ou laquée ou contrecollée sur la couche de substrat (1).

7. Procédé selon une des revendications 1 à 6,
**caractérisé en ce que**
la colle (7) est appliquée sous forme fusible, notamment d'un PVC, sur la couche de substrat (1).

8. Procédé selon une des revendications 1 à 7,
**caractérisé en ce que**
un fil de bobine (6) de la bobine d'antenne (2) à former est posé sur la colle (7) de la couche de substrat (1).

9. Procédé selon la revendication 8,
**caractérisé en ce que**
le fil de bobine (6) de la bobine d'antenne (2) à former est pressé à l'intérieur de la colle (7) en chauffant celle-ci.

10. Procédé selon une des revendications 1 à 9,
**caractérisé en ce que**
la couche de substrat (1) pourvue de la bobine d'antenne (2) est reliée par chaleur et pression à au moins une autre couche intermédiaire et/ou à la couche de recouvrement (4).

11. Procédé selon une des revendications 1 à 7,
**caractérisé en ce que**
la colle est d'abord appliquée sur la couche de substrat (1) au moins sur une taille de surface d'une couche métallique à appliquer ultérieurement sur celle-ci et la bobine d'antenne (2) est ensuite produite par un processus de gravure de la couche métallique.

12. Procédé selon une des revendications 1 à 11,
**caractérisé en ce que**
après la création de la bobine d'antenne (2), la puce est montée sur la colle et/ou la couche de substrat (1) en contactant le fil de bobine (6) de la bobine d'antenne.
